(19) Europäisches Patentamt
European Patent Office
Office européen des brevets

(11) **EP 2 392 812 A1**

(12) **EUROPÄISCHE PATENTANMELDUNG**

(43) Veröffentlichungstag:
**07.12.2011 Patentblatt 2011/49**

(51) Int Cl.:
*F02F 1/00* (2006.01)          *F16J 10/04* (2006.01)

(21) Anmeldenummer: **10164645.3**

(22) Anmeldetag: **01.06.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **Wärtsilä Schweiz AG**
**8401 Winterthur (CH)**

(72) Erfinder:
• **Räss, Konrad**
**8457 Humlikon (CH)**

• **Müller, Jörg**
**8400 Winterthur (CH)**
• **Berchtold, Matthias**
**8360 Eschlikon (CH)**

(74) Vertreter: **Sulzer Management AG**
**Patentabteilung / 0067**
**Zürcherstrasse 14**
**8401 Winterthur (CH)**

(54) **Verschleissarme Hubkolbenbrennkraftmaschine**

(57) Die Erfindung betrifft eine Hubkolbenbrennkraftmaschine, insbesondere eine Grossdieselmaschine, mit mindestens einem Zylinder, wobei jeder Zylinder eine Zylinderlaufbuchse und einen darin hin und her bewegbar angeordneten Kolben aufweist. Der Kolben weist an seiner Mantelfläche wenigstens einen Kolbenring auf. Die Werkstoffe der Zylinderlaufbuchse und der Kolbenringe des auf der Lauffläche der Zylinderlaufbuchse hin und her bewegbaren Kolbens sind hinsichtlich der Verschleissfestigkeit optimal aufeinander abgestimmt, wobei die Kolbenringe zumindest an der gegen die Lauffläche der Zylinderlaufbuchse gerichteten Oberfläche eine Beschichtung aus Chromkeramik aufweisen und die Zylinderlaufbuchse einen gleichmässig verteilten Hartphasenanteil von 0.01 bis 1.99 % enthält.

04_013617.jpg          1 mm

Fig. 4

**Beschreibung**

Die Erfindung betrifft eine Hubkolbenbrennkraftmaschine gemäss dem Oberbegriff des unabhängigen Anspruchs 1. Die Erfindung betrifft insbesondere aufeinander abgestimmte Zylinderlaufbuchsen und Kolbenringe von langsam laufenden Grossdieselmotoren.

Grossdieselmotoren werden häufig als Antriebsaggregate für Schiffe oder auch im stationären Betrieb, beispielsweise zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit Brenn- und Betriebsstoffen zentrale Kriterien für den Betrieb der Maschinen. Unter anderem ist das Kolbenlaufverhalten solcher grossbohriger, langsam laufender Dieselmotoren ein bestimmender Faktor für die Länge der Wartungsintervalle, die Verfügbarkeit des Motors und über den Schmiermittelverbrauch auch unmittelbar für die Betriebskosten und damit für die Wirtschaftlichkeit.

In Hubkolbenbrennkraftmaschinen, insbesondere in grossvolumigen Dieselmaschinen, unterliegen die Zylinderlaufbuchsen und die Kolben im Betriebszustand einer sehr hohen mechanischen und thermischen Belastung. Zudem nutzten sich die Zylinderlaufbuchse und der Kolben, genauer die Lauffläche der Zylinderlaufbuchse und die Kolbenringe des Kolbens, während des Betriebs der Brennkraftmaschine ab. Die durch Abrieb bedingten Verschleisserscheinungen können zu Schäden führen, welche eine aufwändige und kostspielige Reparatur zur Folge haben. Dabei sind insbesondere auch die daraus resultierenden Stillstandszeiten der Hubkolbenbrennkraftmaschine unter wirtschaftlichen Aspekten sehr nachteilig.

Um die Verschleisseigenschaften von Hubkolbenbrennkraftmaschinen zu verbessern, werden grosse Anstrengungen hinsichtlich der Schmierung der Lauffläche und des Kolbens unternommen.

Ein weiterer Ansatz zur Verbesserung der Verschleisseigenschaften von Hubkolbenbrennkraftmaschinen liegt in der Optimierung der Werkstoffeigenschaften der Zylinderlaufbuchsen. Der Werkstoff der Zylinderlaufbuchsen muss eine hohe Festigkeit aufweisen, um den hohen thermischen und mechanischen Spannungen beim Verbrennungsvorgang standzuhalten. Ferner muss der Werkstoff auch ausreichende Verformungs- und Dehneigenschaften aufweisen, um mechanische Spannungsspitzen wenigstens teilweise abzubauen. Um den Werkstoffverschleiss gering zu halten, muss die Zylinderlaufbuchse auch eine hohe Abriebfestigkeit aufweisen.

Die Zylinderlaufbuchsen werden in der Regel mittels eines Giessverfahrens hergestellt. Das Gussmaterial ist dabei vorzugsweise mit Hartstoffen angereichert bzw. der Giess- und Abkühlvorgang wird in an sich bekannter Weise derart beeinflusst, dass sich beim Giessen und / oder beim Abkühlen des Zylinderlaufbuchse-Rohlings im Guss-Grundmaterial mehr oder weniger ausgedehnte Bereiche aus Hartphasen, die zum Beispiel an sich bekannte Karbide oder andere an sich bekannte Hartphasen umfassen können, ausbilden bzw. ausgeschieden werden. Unter dem Begriff ‚Zylinderlaufbuchsen-Rohling' wird hierbei der unbearbeitete, gegossene Körper verstanden, der beispielsweise nach einer nachfolgenden spanenden Bearbeitung und einer allfälligen Wärmebehandlung zur einsatzbereiten Zylinderlaufbuchse wird. Die Hartphasen sind im Guss-Grundmaterial in einer mehr oder weniger unregelmässigen Verteilung eingelagert, sodass eine Kombination von relativ weichem Guss-Grundmaterial und Hartphasen entsteht. Das Guss-Grundmaterial stellt dabei zum Beispiel unter anderem eine gewisse mechanische Elastizität und Dauerfestigkeit des Zylinderliners sicher, so dass dieser den enormen Temperatur- und Druckschwankungsbelastungen im Betriebszustand der Brennkraftmaschine widerstehen kann. Die Hartphasen dagegen geben der Zylinderwand bzw. der Lauffläche des Zylinders einen gewissen Widerstand, insbesondere gegen übermässigen Verschleiss durch Reibung zwischen den Kolbenringen und der Zylinderlauffläche.

Die Zylinderlaufbuchsen von Hubkolbenbrennkraftmaschinen, insbesondere solche von Grossdieselmotoren, bestehen üblicherweise aus Gusseisen oder anderen Eisenwerkstoffen mit eventuell darin eingelagerten Hartphasen. Gusseisen ist eine Eisen-Kohlenstoff-Legierung mit hohem Kohlenstoffgehalt (C>2.06 Gew.-%) sowie weiteren Bestandteilen wie Silicium, Mangan, Phosphor oder Schwefel. Bei Gusseisen wird zwischen Grauguss und dem weissen Gusseisen unterschieden. Beim Grauguss liegt der Kohlenstoff in Form von Graphit vor, und bei weissem Gusseisen in Form von Zementit.

Zementit ist eine Verbindung von Eisen und Kohlenstoff mit der Zusammensetzung $Fe_3C$ (Eisenkarbid). Eisenkarbid tritt als metastabile Phase in weissem Gusseisen und Stahl auf. Bei sehr langsamer Abkühlung oder sehr langen Glühzeiten kann Zementit in Eisen und Graphit zerfallen. Zementit kann als Primärzementit, der durch Kristallisation aus der Schmelze hervorgeht, als Sekundärzementit, der durch Ausscheiden aus dem Austenit gebildet wird, oder als Tertiärzementit, der durch Ausscheiden aus weichem und korrosionsanfälligem Ferrit (Eisen in einem kubischraumzentrierten Kristallgitter) hervorgeht, vorliegen. Als Austenit wird dabei ein kubischflächenzentrierter Mischkristall aus Eisen bezeichnet. Gusseisen enthält bei metastabiler Erstarrung ein Ledeburit genanntes Eutektikum aus Zementit und Austenit. Aus Letzterem scheidet sich bei weiterer Abkühlung Sekundärzementit aus, der sich an den primär ausgeschiedenen Zementit anlagert. Nach abgeschlossener Austenitumwandlung besteht der ehemalige Ledeburit aus einem feinen Gemenge von Zementit und Perlit. Beim Abkühlen einer Gusseisen-Schmelze bildet sich überschüssiger

Primärzementit (Fe$_3$C) in Form grober Nadeln. Überschüssiger Sekundärzementit scheidet sich beim Abkühlen der Schmelze zunächst als Korngrenzen- oder Schalenzementit um die Austenit- bzw. späteren Perlitkristalle ab.

Gusseisen kann als Gusseisen mit Lamellengraphit vorliegen, bei dem der Graphit die Form von dünnen, unregelmässig ausgebildeten Lamellen hat. Gusseisen mit Lamellengraphit weist eine geringe Zugfestigkeit und eine sehr kleine Elastizität auf. Die Korrosionsbeständigkeit von Gusseisen kann durch Zulegieren von Silizium, Chrom, Nickel oder Aluminium erhöht werden. Gusseisen kann auch als duktiles Gusseisen mit Kugelgraphit, Temperguss oder als Gusseisen mit Vermikulargraphit vorliegen. Bei Letzterem liegt der Graphit weder in Lamellenform noch in Kugelform vor, sondern als Vermikeln (Wurm-Form). Die mechanischen Eigenschaften von Vermikulargraphit-Guss liegen zwischen dem Gusseisen mit Lamellengraphit und Gusseisen mit Kugelgraphit.

Die EP-A-0 525 540 beschreibt beispielsweise eine Zylinderlaufbuchse für Brennkraftmaschinen aus perlitischem Gusseisen mit Kugelgraphit, welche gegenüber Zylinderlaufbuchsen aus Gusseisen mit Lamellenstruktur eine höhere Zugfestigkeit und bessere Dehnungseigenschaften aufweist. Der Basislegierung aus Gusseisen mit Kugelgraphit werden dabei noch Zusätze von Bor, Phosphor und gegebenenfalls Vanadium zugegeben, wodurch das Gefüge aus Gusseisen neben den kugelförmigen Graphiteinlagerungen auch netzförmig verteilte, sehr harte Zementit- und/oder Steaditanteile aufweist.

Die EP-A-0 872 567 beschreibt eine Gusseisenlegierung mit Vermikulargraphit für eine Zylinderlaufbuchse einer Hubkolbenbrennkraftmaschine, welche eine hohe Festigkeit und Dehnung aufweist, sowie eine gegenüber Gusseisen mit Kugelgraphit verbesserte Wärmeleitfähigkeit. Die Gusseisenlegierung mit Vermikulargraphit, d.h. eine Gusseisenlegierung mit wurmartig geformten Graphiteinlagerungen, weist zudem eine Hartphase in Form räumlich scharf abgegrenzter Zementit/Steaditanteile auf, die das Gefüge des Gusseisens netzartig und gleichmässig verteilt durchsetzen und einen Volumenanteil zwischen 2% und 20%, insbesondere zwischen 4% und 10% einnehmen.

Die Eigenschaften einer Legierung sind durch die Eigenschaften der einzelnen Gefügebestandteile gegeben. Neben der Korngrösse ist deshalb das relative Mengenverhältnis der Gefügebestandteile zur Beurteilung einer Legierung von Bedeutung.

Es sind verschiedene Verfahren entwickelt worden, um die Mengenanteile von Gefügebestandteilen anhand eines metallographischen Schliffbildes zu bestimmen. Dabei ist zu berücksichtigen, dass im Schliffbild die Flächenanteile, die proportional zum Volumenanteil angesehen werden können, in Erscheinung treten und nicht etwa die Masseanteile. Gegebenenfalls muss eine Umrechnung von Volumen- in Masseprozente durchgeführt werden.

In einfach gelagerten Fällen kann eine Mengenbestimmung durch subjektives Schätzen erfolgen. Alle Eisen-Kohlenstoff-Legierungen mit einem C-Gehalt zwischen 0 und 0.8% C enthalten nach langsamer Abkühlung von etwa 900 °C die Gefügebestandteile Ferrit und Perlit in wechselnden Mengenanteilen. Reines Eisen besteht zu 100% aus Ferrit, während Stahl mit 0.8% C zu 100% aus Perlit besteht. Je 0.1 % C nimmt infolgedessen der Perlitflächenanteil um 0.1 / 0.8 x 100%=12.5% zu. In langsam abgekühlten Stählen lässt sich auf diese Weise mit einiger Übung der Kohlenstoffgehalt anhand des metallographischen Schliffbildes abschätzen.

Bei höheren Genauigkeitsansprüchen müssen die einzelnen Gefügebestandteile ausgemessen werden. Dies kann mit Hilfe eines Planimeters erfolgen, d.h. einem mechanischen Gerät zur Bestimmung von Flächenanteilen.

Beim Wägeverfahren schneidet man die einzelnen Gefügebstandteile aus einem photographischen Abzug aus und wiegt die einzelnen Bildbestandteile auf einer Analysenwaage. Gleichmässige Papierbeschaffenheit vorausgesetzt, verhalten sich dann die Papiergewichte wie die zugehörigen Gefügebestandteile.

Beim Linienschnittverfahren zieht man auf dem photographischen Abzug beispielsweise 10 bis 20 sich kreuzende Geraden und misst mit einem Millimetermass die auf den einzelnen Gefügebestandteilen befindlichen Längen, d.h. es werden die Linienanteile der einzelnen Phasen bestimmt. Die Volumina der einzelnen Gefügebestandteile verhalten sich näherungsweise wie die Linienabschnitte. Durch Mittelwertbildung über alle Linien kann der Volumenanteil berechnet werden.

Zur exakten Ausmessung auch kompliziert aufgebauter Gefüge können sogenannte Integrationstische verwendet werden, wobei es sich dabei im Wesentlichen um einen Kreuztisch handelt. Die Messmethode entspricht ansonsten dem Linienschnittverfahren.

Die Ermittlung des Hartphasenanteils im Grauguss der Zylinderlaufbuchsen von Grossdieselmotoren geschieht bevorzugt mittels einer Auszählmethode. Dabei wird der Hartphasenanteil auf der Lauffläche der Zylinderlaufbuchse bevorzugt oberhalb des oberen Totpunktes der Kolbenringe gemessen, d.h. typischerweise 60 bis 100 mm unterhalb des oberen Endes der Zylinderlaufbuchse. Zur Herstellung eines Hartphasenabdruckes wird eine Fläche von zweckmässigerweise 20 mm x 30 mm mit Siliziumkarbid-Schleifpapier geschliffen. Vor dem nachfolgenden Ätzvorgang wird die Oberfläche beispielsweise mit Alkohol gereinigt und anschliessend getrocknet. Dann wird die Oberfläche während ca. 3-5 Minuten mit einer 3-5% Mischung von Salpetersäure und Alkohol oder Wasser geätzt. Damit wird die Gefügestruktur zur Hartphasenbestimmung sichtbar gemacht.

Zur Auswertung von Gefügestrukturen finden jedoch nicht nur photographische Abzüge Anwendung. Zur Mengenbestimmung der Hartphase von Zylinderlinern werden bevorzugt mit der Replika-Methode hergestellte Abdrücke der Gefügestruktur verwendet. Bei der Replika-Methode wird nach einer sorgfältigen Reinigung der zu untersuchenden Oberfläche ein Replika der zu untersuchenden Stelle gemacht, wobei es zweckmässig sein kann, diesen Oberflächenbereich eventuell zuvor zu schleifen und anzuätzen, d.h. es wird eine Kopie (auch Negativ- oder Spiegelkopie) der zu untersuchenden Oberfläche erstellt. Dazu wird ein Zweikomponenten-Polymer, beispielsweise Microset oder Struers RepliSet, auf der vorbereiteten Stelle aufgebracht. Zwecks einfacherer Handhabung und Stabilisierung des Polymers kann ein hartes Plättchen mit einem sogenannten "Backing Paper" an der Rückseite des die Oberfläche wiedergebenden Polymers angebracht werden. Alternativ kann das Zweikomponenten-Polymer zuerst auf ein Plättchen mit dem 'Backing Paper' aufgebracht und dann an der vorher präparierten Stelle am Zylindereinsatz appliziert werden. Dazu stehen verschiedene Zweikomponenten-Polymere zur Verfügung, wobei die Anwendung eines bestimmten Zweikomponenten-Polymers sich nach der zu untersuchenden Zylinderoberfläche und/oder der aktuellen Umgebungstemperatur bestimmt, wobei die entsprechende, vorgegebene Aushärtezeit beachtet und eingehalten werden muss. Das ausgehärtete Replika kann dann von der Oberfläche abgelöst werden, wobei das Replika einen sehr detailgenauen Abdruck der zu untersuchenden Gefügestruktur enthält. Für die Auswertung kann das Plättchen mit dem Replika direkt unter einem Mikroskop untersucht und ausgewertet werden.

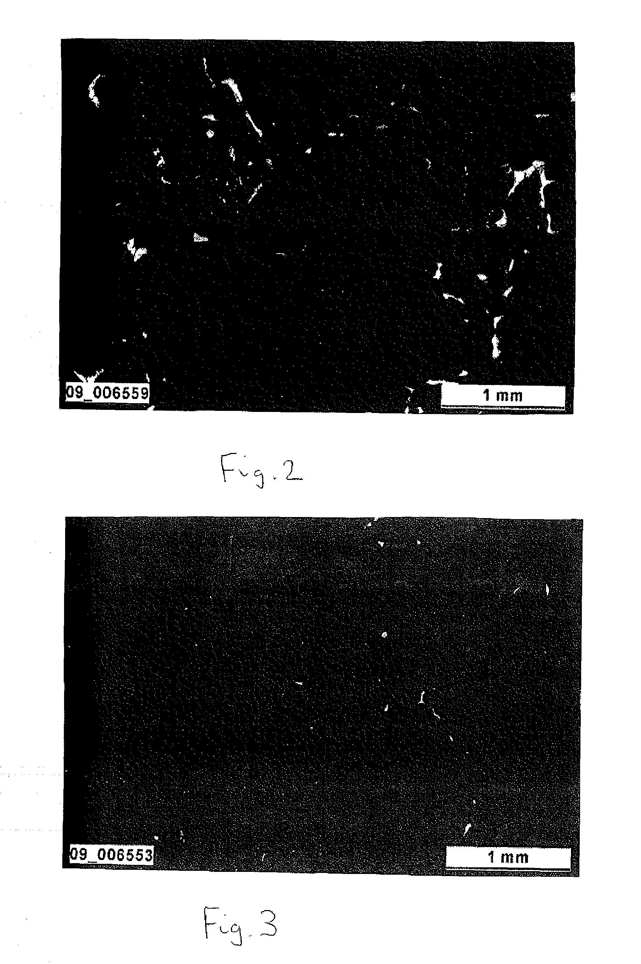

Nach entsprechender Präparation der Oberfläche kann auch ein Triafol-Abdruck hergestellt werden, wobei die Oberflächentemperatur an der Lauffläche zweckmässigerweise zwischen 5° und 30°C liegt. Dabei wird ein Stück Triafol-Folie (Triafol ist ein Produktname für eine Kunststofffolie) während ca. 4 s in Aceton eingeweicht, auf die präparierte Oberfläche aufgebracht und dort während ca. 10 Minuten getrocknet. Die Folie zeigt danach den Gefüge-Abdruck der zu untersuchenden Lauffläche. Für die Auswertung wird die Folie auf einen Objektträger gebracht und mit Kohledampf beschichtet um den Kontrast zu erhöhen. Die Mikrogefügestruktur eines Abdruckes entspricht beispielsweise einem Bild wie in Fig. 2 gezeigt, wobei die Hartphase als Partikel in einer Matrix aus Graphit und Perlit sichtbar ist. Das Auszählen des Hartphasenanteils geschieht dann beispielsweise mit einer Integrationsplatte mit typischerweise 100 Punkten, d.h. einem Linienmuster mit sich rechtwinklig kreuzenden Geraden mit 100 Schnittstellen. Die Vergrösserung beträgt dabei 100 : 1. Unter diesen Voraussetzungen wird pro Messfeld eine Fläche von 1 mm$^2$ ausgezählt. 16 solche Messfelder werden unmittelbar nebeneinander liegend für die Hartphasenbestimmung ausgezählt, wobei bei jedem betrachteten Quadrat diejenigen Punkte der Integrationsplatte gezählt werden, die mit Hartphase zusammenfallen. Der Hartphasenanteil wird durch das Verhältnis der Anzahl Punkte, die sich mit Hartphase decken, zur totalen Anzahl Punkte bestimmt, d.h.

$$\text{Hartphasenanteil [\%]} = 100\ \% \times \text{Hartphasenpunkte} / \text{total Anzahl Punkte}$$

Bei diesem Auszählverfahren werden Punkte, die auf der Hartphasengrenze sitzen, als halbe Punkte gezählt.

Der Hartphasernanteil entspricht somit einem Flächenanteil an Hartphase pro Flächenanteil der Legierung (= Grundmatrix mit darin eingelagerter Hartphase) an einer zu untersuchenden Oberfläche. In vorliegendem Text beziehen sich die Prozentangaben für die Hartphase - wenn nichts anderes vermerkt - immer auf Flächenprozente, d.h. auf Flächenanteile der Hartphase pro Flächeneinheit der zu untersuchenden Legierungsoberfläche, wobei die Flächenprozente insbesondere im Sinne vorstehend genannter Messmethode für die Ermittlung des Hartphasenanteils im Grauguss der Zylinderlaufbuchsen von Grossdieselmotoren bestimmt werden.

Hartphasenpartikel vergrössern allgemein die Verschleissfestigkeit der Lauffläche von Zylinderlaufbuchsen. Heutige Zylinderlaufbuchsen werden vorteilhaft mit einem Hartphasenanteil von 3 % bis 7 % gegossen, wobei früher auch Gusslegierungen mit wesentlich höherem Hartphasenanteil verwendet wurden.

Solange die Hartphasenpartikel fest in der Matrix fixiert sind, ergibt sich üblicherweise kein abnormes Laufverhalten des Kolbens in der Zylinderlaufbuchse. Falls die Partikel nicht mehr durch die Matrix gebunden werden, können sie lose aus der Zylinderlauffläche fallen und dadurch einen unerwünschten Abrasionsverschleiss hervorrufen, der dann in kürzester Zeit die Lauffläche der Zylinderlaufbuchse vollständig zerstören kann.

Die Metallmatrix kann durch Schwefelsäure korrosiv angegriffen werden. Der korrosive Angriff kann verstärkt an Grenzflächen auftreten, was zu einem räumlichen Vorstehen der Hartphasenpartikel führen kann. Diese Hartphasenpartikel können dann durch einen darüber gleitenden Kolbenring verstärkt beansprucht werden (beispielsweise durch Biegung) und können somit leicht zertrümmert werden und teilweise oder ganz aus der Zylinderlauffläche ausbrechen. Dies führt dann zu unerwünschtem abrasiven Verschleiss, der innert kurzer Zeit die Zylinderlaufbuchse oder zumindest deren Lauffläche vollständig zerstören kann.

Kolbenringe für Hubkolbenbrennkraftmaschinen bestehen typischerweise aus Gusseisen oder Stahl, wobei diese Kolbenringe oft noch mit einer harten Schicht versehen werden. Der Grundkörper der Kolbenringe, d.h. der üblicherweise aus Gusseisen oder Stahl bestehende Kolbenring ohne Hartschicht, wird im Weiteren als Roh-Kolbenring bezeichnet. Als Gusseisen kann beispielsweise Grauguss, d.h. Gusseisen mit Lamellengraphit, oder Gusseisen mit Kugelgraphit, oder Gusseisen mit Vermikulargraphit eingesetzt werden.

Als Stahl werden metallische Legierungen bezeichnet, deren Hauptbestandteil Eisen ist und deren Kohlenstoffgehalt zwischen 0,01 % und 2,06 Gew-% liegt. Stahl ist chemisch gesehen eine Legierung aus Eisen und Eisenkarbid.

Die äussere Hartschicht der Kolbenringe kann beispielsweise aus Chrom, Molybdän, Nickel-Graphit, Chrom-Carbid, Cermet, Aluminiumbronze, Mo- oder Ni-Cr-basierte Legierung mit Cr-Carbid- oder Graphit-Bronze-Einlagerungen, Chrom-Nitrid, Nickelaluminid, Nickelchrom, Nickel basierte Legierung mit Chrom-Karbid-Einlagerungen oder aus einer Keramikschicht bestehen. Als Keramik kommen beispielsweise Metalloxide, Karbide oder Nitride in Frage.

Die Hartschichten können beispielsweise mit einem galvanischen Verfahren, durch Plasmaspritzen, mittels einem HVOF- (High Velocity Oxy Fuel), PVD-(Physical Vapor Deposition) oder HIP-Verfahren (Hot Isostatic Pressing), oder durch ein Laserstrahlauftragsschweissen (Laser Surface Cladding) auf die Kolbenringe aus Gusseisen oder Stahl aufgebracht werden.

Hartchromschichten oder Keramikschichten lassen sich beispielsweise mit einem galvanischen Verfahren aufbringen. Ein Plasmaspritzverfahren eignet sich beispielsweise zum Aufbringen einer Schicht aus Molybdän, Nickel-Graphit, Chrom-Karbid, Cermet, Aluminiumbronze, oder einer Mo- oder Ni-Cr-basierten Legierung mit Cr-Karbid- oder Graphit-Bronze-Einlagerungen. Ein HVOF-Verfahren eignet sich beispilsweise zum Aufbringen von mit Karbiden versetzten Mo- oder Ni-Cr-basierten Legierungen. Chromnitridschichten lassen sich beispielsweise auch gut mit einem PVD-Verfahren aufbringen, wobei sich ein HIP-Verfahren für beispielsweise Nickelchrom- oder Nickelaluminid-Schichten eignet. Das Laserauftragsschweissen eignet sich beispielsweise zum Aufbringen von Nickel-Legierungen enthaltend Chrom-Karbide.

Bei den bisher bekannten, modernen Hubkolbenbrennkraftmaschinen wird jeweils ein mit Kolbenringen versehener Kolben in einer Zylinderlaufbuchse bzw. auf deren Zylinderlauffläche mit hohem Hartphasenanteil hin und her bewegt, wobei dieser Hartphasenanteil üblicherweise zwischen 3 bis 10 % beträgt.

Bei Hartphasenanteilen von 3 bis 7 % gemäss dem Stand der Technik hängt die Partikelgrösse der Hartphase von den Kristallisationsbedingungen ab, beträgt jedoch etwa 10 $\mu$m bis 1 mm. Durch eine beschleunigte Werkzeugabnutzung aufgrund grobkörniger Hartphasenpartikel werden Werkzeuge erhalten, die nicht mehr wirklich eine spanende Bearbeitung gewährleisten, sondern vielmehr das zu bearbeitende Material unter Druck plastisch deformieren, wodurch insbesondere auch die an der Oberfläche befindlichen Hartphasenpartikel zerstört werden können, was dann später zu einem höheren Verschleiss der Lauffläche der Zylinderlaufbuchse durch zerstörte, lose vorliegende, sehr harte und spröde Partikel führen kann.

Aufgabe vorliegender Erfindung ist die Bereitstellung einer Hubkolbenbrennkraftmaschine mit gegenüber dem Stand der Technik verbesserten Lauf- und Verschleissfestigkeitseigenschaften.

Erfindungsgemäss wird diese Aufgabe durch eine Hubkolbenbrennkraftmaschine mit den Merkmalen von Anspruch 1 gelöst. Die abhängigen Ansprüche beziehen sich auf besonders vorteilhafte Ausführungsformen der Erfindung.

Um den Verschleiss der Zylinderlaufbuchse und der Kolbenringe bei minimalem Schmiermittelverbrauch in vertretbaren Grenzen zu halten, müssen alle die Tribologie dieser aufeinander gleitenden Kolbenringe und Zylinderlaufflächen beeinflussenden Faktoren optimiert werden. Diese Faktoren betreffen neben der Zusammensetzung des Schmiermittels, der Art und Weise des Aufbringens des Schmiermittels auf die Lauffläche und auf die Mantelfläche des Kolbens, sowie der Schmiermittelzuführrate auch die chemische Zusammensetzung des Brennstoffs, die Oberflächenstruktur der Zylinderlauffläche und die Werkstoffe der verschiedenen Komponenten.

Im Rahmen der weiteren Entwicklung von hinsichtlich der Verschleissfestigkeit verbesserten Hubkolbenbrennkraftmaschinen hat sich gezeigt, dass für die Verschleissfestigkeit eines Zylinders einer Hubkolbenbrennkraftmaschine nicht nur die Lauffläche einer Zylinderlaufbuchse wesentlich ist, sondern vielmehr die Verschleissfestigkeit der gegenläufig beanspruchten Teile, d.h. sowohl die Lauffläche der Zylinderlaufbuchse selbst, wie auch die auf der Lauffläche der Zylinderlaufbuchse bewegten Kolbenringe.

Die erfindungsgemässe Hubkolbenbrennkraftmaschine weist wenigstens einen Zylinder auf. Jeder Zylinder enthält eine Zylinderlaufbuchse und einen darin hin und her bewegbar angeordneten Kolben, wobei der Kolben an seiner Mantelfläche wenigstens einen Kolbenring aufweist. Der Kolben hat im Wesentlichen die Form eines Kreiszylinders, so dass die Mantelfläche des Kolbens die zwischen der Grund- und Deckfläche befindliche, gegen die Lauffläche der Zylinderlaufbuchse gerichtete Aussenfläche des Kolbens darstellt. Die Werkstoffe der Zylinderlaufbuchse und der Kolbenringe des auf der Lauffläche dieser Zylinderlaufbuchse hin und her bewegbaren Kolbens sind jeweils hinsichtlich der Verschleissfestigkeit optimal aufeinander abgestimmt, wobei die Kolbenringe zumindest an der gegen die Lauffläche der Zylinderlaufbuchse gerichteten Oberfläche eine Beschichtung aus Chromkeramik aufweisen und die Zylinderlaufbuchse aus einer Gusslegierung mit einem Hartphasenanteil von 0.01 bis 1.99 % besteht.

Der Grundkörper der Kolbenringe, d.h. der Roh-Kolbenring, besteht typischerweise aus Stahl oder Gusseisen, wobei Gusseisen mit Lamellengraphit oder Gusseisen mit Vermikulargraphit bevorzugt werden.

Bevorzugt weist die ganze Oberfläche der Kolbenringe eine Hartschicht aus Chromkeramik auf.

Bei den Chromkeramikschichten werden jeweils Keramik-Partikel in eine Matrix aus Chrom eingelagert. Die Chromkeramik-Schicht ist bevorzugt eine galvanisch abgeschiedene Chromschicht mit eingelagerten Keramik-Partikeln. Dabei werden feinkörnige Keramik-Partikel, welche zudem möglichst gleichmässig in der Chromschicht verteilt sind, bevorzugt. Die Keramikpartikel können dabei Oxidkeramiken, Carbide, Nitride, Diamant oder Mischungen derselben betreffen.

Die für die erfindungsgemässe Hubkolbenbrennkraftmaschine eingesetzten Chromkeramikmaterialien werden bevorzugt aus der Gruppe von Chrom-Aluminiumoxid (Cr-Al$_2$O$_3$), Chrom-Siliziumnitrid (Cr-Si$_3$N$_4$), Chrom-Siliziumoxy-nitrid, Siliziumoxid und Chrom-Diamant ausgewählt. Aluminiumoxidkeramiken basieren dabei auf $\alpha$-Al$_2$O$_3$ (Korund). Das Siliziumnitrid kann in den Modifikationen (Kristallstruktur) $\alpha$-Si$_3$N$_4$, $\beta$-Si$_3$N$_4$ oder $\gamma$-Si$_3$N$_4$ eingesetzt werden. Diamant ist eine Modifikation von Kohlenstoff im kubischen Kristallsystem.

Die für die erfindungsgemässe Hubkolbenbrennkraftmaschine eingesetzten Zylinderlaufbuchsen bestehen aus Gusseisen mit einem Hartphasenanteil von 0.01 bis 1.99 %, wobei die Hartphase bevorzugt in einer perlitischen Matrix eingebettet ist.

Das verwendete Gusseisen weist bevorzugt eine perlitische Grundmasse mit Phosphideutektikum auf, welche als Gefügebestandteil Steadit genannt wird. Steadit ist eine Folge von höheren Phosphorgehalten in Gusseisen. Phosphor wird dem Gusseisen vor allem wegen der Verbesserung der Verschleisseigenschaften zulegiert.

Die perlitische Matrix weist bevorzugt lamellar angeordnete, eutektoide Gefügebestandteile auf. Die perlitische Matrix betrifft dabei ein Phasengemisch aus Ferrit und Zementit (Eisenkarbid). Das Phasengemisch aus Ferrit und Zementit entsteht durch eutektoide Umwandlung von Eisen-Kohlenstoff-Legierungen bei Kohlenstoffgehalten zwischen 0.02-6.67 Gew.-%. Die lamellare Perlit-Struktur entsteht während der Bildung des Eutektoids Perlit durch lokale Kohlenstoff-Verarmung einerseits und Kohlenstoff-Anreicherung der daran anschliessenden Nachbargebiete andererseits. Bei Kohlenstoff-Gehalten von weniger als 0.02 Gew-% C entsteht ein Gefüge aus Ferrit, d.h. $\alpha$-Fe.

Bevorzugt besteht die Hartphase aus Zementit oder Steadit oder beiden genannten Komponenten. Zementit ist eine Verbindung von Eisen und Kohlenstoff der Zusammensetzung Fe$_3$C (Eisenkarbid).

Bei üblichen Verfestigungsraten beim Sandguss oder Kokillenguss von Zylinderlaufbuchsen besteht die Hartphase - abhängig von der chemischen Zusammensetzung und der ungestörten heterogenen Graphit-Keimbildung - entweder aus Steadit und/oder aus einer Mischung von Steadit und ledebritischem Zementit (Eisenkarbid), welche in eine fast vollständig perlitische Matrix mit nur einer geringen Menge an freiem Ferrit und Graphit, insbesondere Lamellengraphit, eingebettet ist. Das Verhältnis von Steadit zu ledebritischem Zementit hängt von den absichtlich für die Verbesserung der verschleissverringernden Eigenschaften zugegebenen Elemente und deren Mengen ab, wobei als verschleissverringernde Elemente insbesondere Phosphor, Bor und Vanadium verwendet werden. Die Schmelze kann jedoch auch unvermeidbare Verunreinigungen aufweisen, welche das Verhältnis von Steadit zu ledebritischem Zementit beeinflussen können. Im Weiteren hängt das Verhältnis von Steadit zu ledebritischem Zementit auch von den Keimbildungsbedingungen während der Erstarrung des Gusseisens ab.

Das ternäre Phosphid-Eutektikum namens Steadit besteht aus 41 Gew-% Eisenphosphid (Fe$_3$P), 30 Gew-% steatitischem Zementit (Fe$_3$C) und 29 Gew-% Austenit ($\gamma$-Mischkristalle von Eisen-Legierungen), welcher während der eutektischen Transformation in Perlit (streifenförmige Gefügeform von Eisenwerkstoffen) zerfällt. Perlit besteht aus Ferrit und perlitischem Zementit.

Die Anzahl, Grösse und Verteilung der gebildeten Steadit-Partikel hängt direkt von der Phosphormenge und der aus der Schmelze ausgeschiedenen Elemente ab, sowie von der Anzahl und Verteilung der eutektischen Kristalle. Bevorzugt werden relativ kleine Steadit-Partikel mit einer Ausdehnung von 10 $\mu$m bis 1 mm gebildet, oder es entstehen entsprechend mehr Steadit-Partikel mit einer Ausdehnung von typischerweise 10 $\mu$m bis 350 $\mu$m, oder es wird eine Mischung beider genannter Steadit-Partikel gebildet. Die Form der Steadit-Partikel reicht von globulistisch bis dendritisch. Hinsichtlich der Verschleisseigenschaften und der Materialbearbeitung werden gleichmässig verteilte, globulistische, kleine Steadit-Partikel bevorzugt.

Die Härte von Steadit hängt von den aus der Schmelze in das Phosphid-Eutektikum ausgeschiedenen Elementen und deren Konzentration ab. Die mittlere Härte von Steadit beträgt zwischen 700 bis 800 HV (Vickershärte nach DIN EN ISO 6507-1:2005 bis -4:2005).

Die Härte von Zementit hängt - wie auch die Härte von Steadit - von der Menge der im Eisen-Mischkristall vorhandenen karbidstabilisierenden Elementen ab. Die mittlere Härte der aus Steadit und ledebritischem Zementit bestehenden Hartphase beträgt etwa 800 bis 1200 HV und ist klar höher als die Härte von Steadit allein. Damit weist eine aus Steadit und ledebritischem Zementit bestehende Hartphase gegenüber reinem Steadit jedoch auch eine höhere Sprödigkeit auf, und die Bearbeitbarkeit von Gussmaterial mit einer aus Steadit und ledebritischem Zementit bestehenden Hartphase ist schlechter, womit auch der Verschleiss der Bearbeitungswerkzeuge erhöht wird. Die Hartphase kann auch nur aus ledebritischem Zementit allein bestehen, d.h. ohne gleichzeitiges Vorhandensein von Steadit.

Die Härte einer lamellar perlitischen Matrix beträgt vorzugsweise 250 bis 400 HV. Die Härte hängt dabei von den weiteren im Eisenmischkristall vorhandenen Elemente und der Abkühlrate während der Austenit-Transformation ab.

Da die in der erfindungsgemässen Hubkolbenbrennkraftmaschine verwendete Zylinderlaufbuchse nur einen geringen Anteil an Hartphase enthält, bleiben die erforderlichen Dehneigenschaften der Zylinderlaufbuchse auch bei Verwendung sehr harter und an sich spröder Hartphasenpartikel gewährleistet.

Die Härte der in der Zylinderlaufbuchse enthaltenen Hartphasenpartikel beträgt bevorzugt mehr als 1000 HV.

Die Hartphase der Zylinderlaufbuchsen besteht bevorzugt aus $Fe_3C$ und $Fe_3P$ sowie geseigerten, karbidstabilisierenden Elementen. Die geseigerten, karbidstabilisierenden Elemente, welche bewusst in die Gusslegierung zulegiert werden oder als Spurenelemente in der verwendeten Gusslegeierung vorhanden sind, betreffen insbesondere Cr, V, B, Mn, Mo, W, Zr und Te.

Die Menge, Grösse und Verteilung der beim Abkühlen der Gusslegierung gebildeten Hartphasenpartikel hängt von den die Kristallisation beeinflussenden Parameter ab. Durch Verringerung der in einer Zylinderlaufbuchse vorhandenen Menge an Hartphase in einen Bereich von 0.01 bis 1.99 % werden kleinere, feinkörnige Hartphasenpartikel gebildet, welche gegenüber dem Stand der Technik zudem gleichmässiger im Gefüge verteilt sind. Die Grösse der in der Zylinderlaufbuchse einer erfindungsgemässen Hubkolbenbrennkraftmaschine befindlichen Hartphasenpartikel beträgt bevorzugt 10 $\mu$m bis 350 $\mu$m, was eine gute Materialbearbeitung und einen nur geringen Werkzeugverschleiss gewährleistet

Die Anzahl der bei der Herstellung der Zylinderlaufbuchsen üblicherweise entstehenden Mikroschwindungen, welche durch die geringere Dichte der während der Abkühlung der Schmelze von Eisenlegierungen kristallisierten Hartphasen hervorgerufen werden, beispielsweise die durch Steadit (perlitische Grundmasse mit Phosphid-Eutektikum) hervorgerufenen Mikroschwindungen, ist bei den in den erfindungsgemässen Hubkolbenbrennkraftmaschinen verwendeten Zylinderlaufbuchsen gegenüber den aus dem Stand der Technik bekannten Zylinderlaufbuchsen stark reduziert, da der Hartphasenanteil auf 0.01 bis 1.99 % reduziert ist.

In einer bevorzugten Ausführung weist die Hubkolbenbrennkraftmaschine Zylinderlaufbuchsen mit einem Hartphasenanteil von 0.05 % bis 1.90 % auf. Weiter bevorzugt wird ein Hartphasenanteil von 0.05 bis 1.70 % und insbesondere von 0.05 % bis 1.50 %.

Die geringe Menge an Hartphase, welche zudem gegenüber dem Stand der Technik räumlich besser verteilt und feinkörniger ist und weiter eine bessere Verteilung der Hartphasengrösse aufweist, d.h. die Hartphasenpartikel weisen ein sehr viel gleichmässigere Partikelgrösse auf, verbessert die spandende Bearbeitbarkeit, wodurch beispielsweise Schnittwerkzeuge weniger beschädigt und abgenutzt werden. Die bessere Bearbeitbarkeit erlaubt auch höhere Bearbeitungsgeschwindigkeiten, beispielsweise Schnittgeschwindigkeiten, und längere Werkzeugstandzeiten.

Durch den gegenüber dem Stand der Technik verringerten Hartphasenanteil im Gefüge der Zylinderlaufbuchsen verringert sich auch die Zahl der während dem Betrieb der Maschine aus der Lauffläche herausgelösten Hartpartikel, welche eine sekundäre Abrasion hervorrufen können.

Das für die Zylinderlaufbuchsen verwendete Gusseisen kann weitere Komponenten wie MnS, TiN oder Carbonitrid enthalten, welche das Laufverhalten eines Kolbens in einer Zylinderlaufbuchse unbeeinflusst lassen.

Bevorzugt ist der Hartphasenanteil in der Zylinderlaufbuchse gleichmässig verteilt.

In einer weiteren bevorzugten Ausführungsform ist der Hartphasenanteil über die Länge der Zylinderlaufbuchse, d.h. in axialer Richtung, unterschiedlich eingestellt, womit das Verschleiss- und/oder Kolbenlaufverhalten weiter optimiert werden kann. In dieser Ausführungsform weist die Zylinderlaufbuchse, insbesondere die Lauffläche der Zylinderlaufbuchse, in axialer Richtung einen Hartphasen-Gradienten auf, wobei der Hartphasenanteil an jeder Stelle zwischen 0.01 und 1.99 % liegt. Der Gradient kann dabei einen linearen Verlauf oder aber auch einen anderweitigen funktionellen Verlauf annehmen. Insbesondere kann der Hartphasenanteil in den Bereichen des oberen und/oder unteren Totpunktes des Kolbens einen gegenüber dem axial mittleren Teil der Zylinderlaufbuchse grösseren Anteil an Hartphase aufweisen.

Die Kombination von Chromkeramik-beschichteten Kolbenringen mit Zylinderlaufbuchsen enthaltend einen sehr kleinen Hartphasenanteil bewirkt eine geringe Verschleissrate. Zudem bewirken weniger und kleinere Hartphasenpartikel in der Gusslegierung einen geringen Abrasiv-Verschleiss. Im Weiteren wird durch die Zugabe von nur geringen Mengen an Hartphasenmaterial die Herstellbarkeit und Bearbeitbarkeit von Zylinderlaufbuchsen vereinfacht, und die Materialeigenschaften für die spanende Bearbeitung entsprechen im Wesentlichen denjenigen aus demselben Gussmaterial, jedoch ohne jegliche Hartphasenpartikel, d.h. die mechanische Bearbeitbarkeit von Zylinderlaufbuchsen mit geringem Hartphasenanteil entspricht im Wesentlichen derjenigen ohne jegliche Hartphase. Folglich wird die Bearbeitungszeit von Zylinderlaufbuchsen enthaltend einen geringen Hartphasenanteil gegenüber solchen ohne jegliche Hartphase nicht verlängert und die Lebensdauer der Bearbeitungswerkzeuge wird durch den geringen Hartphasenanteil nicht merkbar verkürzt. Unter dem Begriff "geringer Hartphasenanteil" wird hierbei immer ein Hartphasenanteil von weniger als 1.99 % verstanden. Der Zylinder einer erfindungsgemässen Hubkolbenbrennkraftmaschine, d.h. die hinsichtlich der Materialzusammensetzung aufeinander abgestimmte Zylinderlaufbuchse und Kolbenringe, kann mit an sich bekannten Giessverfahren aus einer Gusseisenlegierung hergestellt werden. Der Zylinder ist somit einfach und kostengünstig herzustellen.

Die Erfindung wird im Folgenden durch Figuren weiter erläutert. Es zeigen:

Fig. 1     eine schematisch perspektivische Ansicht eines Zylinders einer Grossdieselmaschine;

Fig. 2     ein Bild hoher Auflösung einer Lauffläche einer Zylinderlaufbuchse enthaltend 1.8 % Hartphase;

Fig. 3    ein Bild mit hoher Auflösung einer Lauffläche einer Zylinderlaufbuchse enthaltend 0.2 % Hartphase;

Fig. 4    ein Bild mit hoher Auflösung einer Lauffläche einer Zylinderlaufbuchse enthaltend 2.0 % Hartphase;

Fig. 5    ein Bild mit hoher Auflösung einer Lauffläche enthaltend 3.0 % Hartphase;

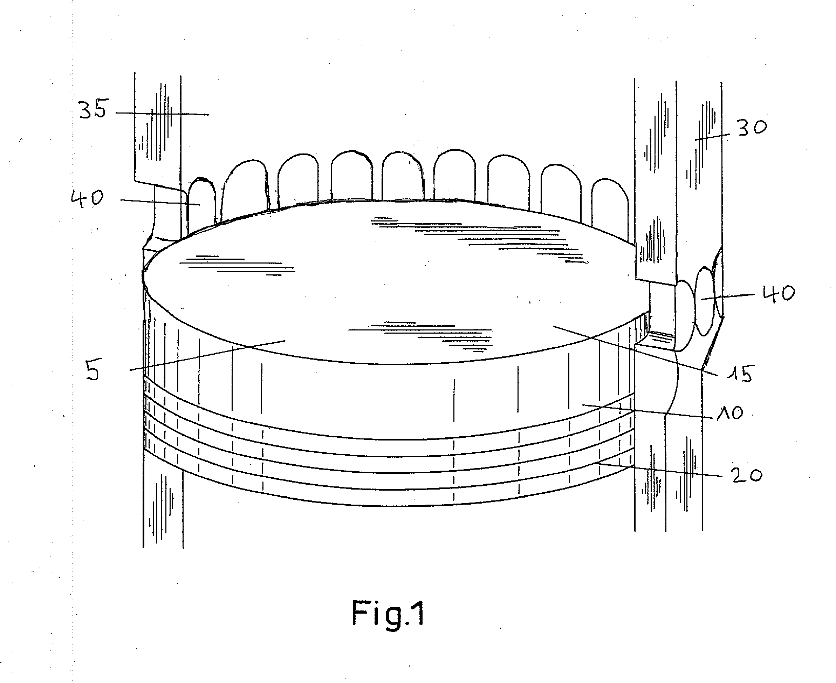

In Fig. 1 ist schematisch ein Ausschnitt eines Zylinders einer langsam laufenden Zweitakt-Grossdieselmaschine dargestellt. Der Zylinder enthält eine Zylinderlaufbuchse 30 mit Spülluftöffnungen 40. Die Innenfläche der Zylinderlaufbuchse 30 bildet die Lauffläche 35. Im Weiteren zeigt Fig. 1 einen Kolben 5 mit einer gegen den Brennraum gerichteten Kolbenoberfläche 15 und einer zylinderförmigen Kolbenmantelfläche 10. Auf der Kolbenmantelfläche 10 sind vier Kolbenringe 20 angebracht. Während dem Betrieb der Brennkraftmaschine bewegt sich der Kolben 5 in der Zylinderlaufbuchse 30 auf und ab, wobei die Kolbenringe 20 auf der Lauffläche 35 der Zylinderlaufbuchse 30 gleiten, und die Kolbenringe 20 und die Lauffläche 35 somit einer gewissen Abnutzung ausgesetzt sind.

Fig. 2 zeigt ein Schliffbild hoher Auflösung einer Lauffläche einer Zylinderlaufbuchse einer Hubkolbenbrennkraftmaschine enthaltend 1.8 % Hartphase. Die Länge des Messbalkens beträgt 1 mm. Die Partikelstruktur im Bild zeigt eine dendritische Form der Hartphase.

Fig. 3 zeigt ein Schliffbild einer Lauffläche einer Zylinderlaufbuchse einer erfindungsgemässen Hubkolbenbrennkraftmaschine enthaltend 0.2 % Hartphase. Gegenüber Fig. 2 sind wesentlich weniger Hartphasen vorhanden, wobei in Fig. 3 die Hartphasen eher eine globulistische Form aufweisen.

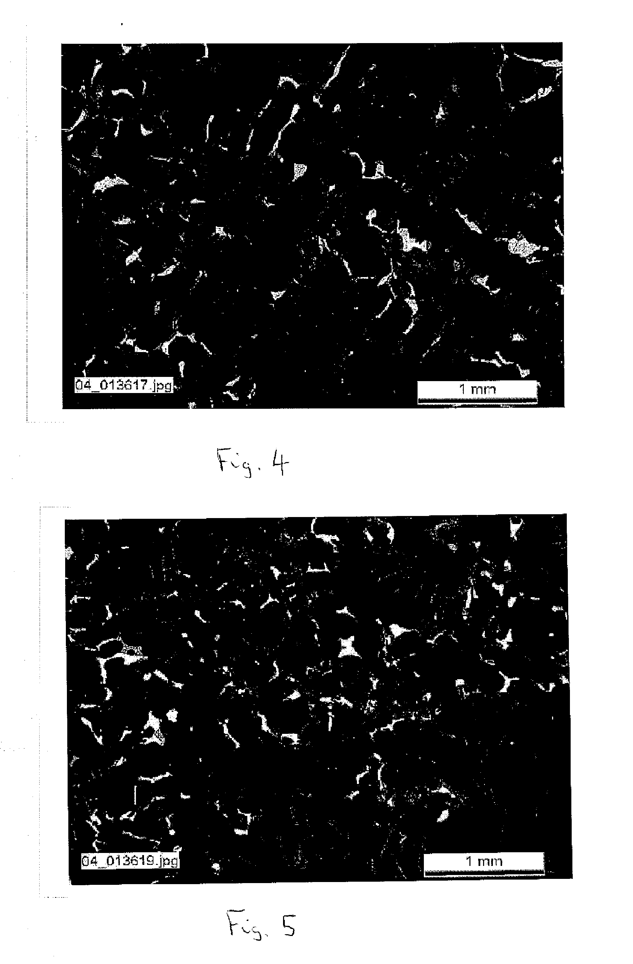

Fig. 4 zeigt ein Schliffbild hoher Auflösung einer Lauffläche einer Zylinderlaufbuchse einer Hubkolbenbrennkraftmaschine enthaltend 2.0 % Hartphase. Die Länge des Messbalkens beträgt 1 mm. Die Partikelstruktur zeigt eine dendritische Form der Hartphase.

Fig. 5 zeigt ein Schliffbild hoher Auflösung einer Lauffläche einer Zylinderlaufbuchse einer Hubkolbenbrennkraftmaschine enthaltend 3.0 % Hartphase. Die Länge des Messbalkens beträgt 1 mm. Die Partikelstruktur zeigt ebenfalls eine dendritische Form der Hartphase, wobei die gegenüber Fig. 4 wesentlich höhere Dichte der Hartphase gut zu erkennen ist.

**Patentansprüche**

1.  Hubkolbenbrennkraftmaschine mit mindestens einem Zylinder, wobei jeder Zylinder eine Zylinderlaufbuchse und einen darin hin und her bewegbar angeordneten Kolben aufweist, und der Kolben an seiner Mantelfläche wenigstens einen Kolbenring aufweist,
    **dadurch gekennzeichnet, dass**
    die Werkstoffe der Zylinderlaufbuchse und der Kolbenringe des auf der Lauffläche der Zylinderlaufbuchse hin und her bewegbaren Kolbens hinsichtlich der Verschleissfestigkeit optimal aufeinander abgestimmt sind, wobei die Kolbenringe zumindest an der gegen die Lauffläche der Zylinderlaufbuchse gerichteten Oberfläche eine Beschichtung aus Chromkeramik aufweisen und die Zylinderlaufbuchse einen Hartphasenanteil von 0.01 bis 1.99 % enthält.

2.  Hubkolbenbrennkraftmaschine nach Anspruch 1, **dadurch gekennzeichnet, dass** die Zylinderlaufbuchse aus Gusseisen mit darin eingelagerten Hartphasen besteht.

3.  Hubkolbenbrennkraftmaschine nach Anspruch 1 oder 2, **dadurch gekennzeichnet, dass** die Hartphase aus der Gruppe von Karbiden, Zementit und Steadit gewählt wird.

4.  Hubkolbenbrennkraftmaschine nach einem der Ansprüche 1 bis 3,
    **dadurch gekennzeichnet, dass** die Hartphase $Fe_3P$ und/oder $Fe_3C$ als Hauptbestanteile enthält.

5.  Hubkolbenbrennkraftmaschine nach einem der Ansprüche 1 bis 4,
    **dadurch gekennzeichnet, dass** die Hartphasenpartikel in eine perlitische Matrix eingebettet sind.

6.  Hubkolbenbrennkraftmaschine nach einem der Ansprüche 1 bis 5, wobei die Zylinderlaufbuchse einen Hartphasenanteil von 0.05 bis 1.90 %, insbesondere 0.05 bis 1.70 % aufweist.

7.  Hubkolbenbrennkraftmaschine nach einem der Ansprüche 1 bis 6,
    **dadurch gekennzeichnet, dass** die Hartphasenpartikel eine mittlere Ausdehnung von 10 μm bis 1 mm, insbesondere zwischen 10 μm bis 350 μm, aufweisen.

8. Hubkolbenbrennkraftmaschine nach einem der Ansprüche 1 bis 7,
   **dadurch gekennzeichnet, dass** die Hartphasenpartikel eine globulistische oder dendritische Form ausweisen.

9. Hubkolbenbrennkraftmaschine nach einem der Ansprüche 1 bis 8,
   **dadurch gekennzeichnet, dass** die mittlere Härte der in der Zylinderlaufbuchse enthaltenen Hartphasenpartikel mehr als 1000 HV beträgt.

10. Hubkolbenbrennkraftmaschine nach einem der Ansprüche 1 bis 9,
    **dadurch gekennzeichnet, dass** jeder Kolbenring aus einem ringförmigen Grundkörper aus Gusseisen mit Lamellengraphit oder aus Gusseisen mit Vermiculargraphit besteht, der weiterhin eine äussere Beschichtung aus Chromkeramik aufweist.

11. Hubkolbenbrennkraftmaschine nach einem der Ansprüche 1 bis 10,
    **dadurch gekennzeichnet, dass** die Chromkeramik-Schicht der Kolbenringe eine Chromschicht mit eingelagerten Keramik-Partikeln ist.

12. Hubkolbenbrennkraftmaschine nach Anspruch 11, **dadurch gekennzeichnet, dass** die Keramik-Partikel aus der Gruppe Aluminiumoxid ($Al_2O_3$), Siliciumnitrid ($Si_3N_4$) und Diamant, oder einer Mischung davon ausgewählt sind.

13. Hubkolbenbrennkraftmaschine nach einem der Ansprüche 1 bis 12,
    **dadurch gekennzeichnet, dass** die Hubkolbenbrennkraftmaschine eine Grossdieselmaschine ist.

Fig.1

EP 2 392 812 A1

Fig.2

Fig.3

04_013617.jpg · 1 mm

Fig. 4

04_013619.jpg · 1 mm

Fig. 5

| Europäisches Patentamt European Patent Office Office européen des brevets | **EUROPÄISCHER RECHERCHENBERICHT** | **Nummer der Anmeldung** EP 10 16 4645 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 088 476 A (TAKAO TSUTOMU ET AL) 9. Mai 1978 (1978-05-09) * "Comparative standard liner"Tabelle 4 * ----- | 1-13 | INV. F02F1/00 F16J10/04 |
| X | WO 94/10354 A1 (COFAP [BR]; ESPOSITO PAULO SERGIO [BR]) 11. Mai 1994 (1994-05-11) * Seite 1, Zeile 26 - Seite 2, Zeile 8 * ----- | 1-13 | |
| A | JP 3 128162 A (MAZDA MOTOR) 31. Mai 1991 (1991-05-31) * Tabelle 2 * ----- | 1 | |
| A | JP 7 018368 A (TEIKOKU PISTON RING CO LTD) 20. Januar 1995 (1995-01-20) * Zusammenfassung * ----- | 1 | |
| A | US 6 553 957 B1 (ISHIKAWA YOSHIKI [JP] ET AL) 29. April 2003 (2003-04-29) * das ganze Dokument * ----- | 1 | |

| | | RECHERCHIERTE SACHGEBIETE (IPC) |
|---|---|---|
| | | F02F F16J |

Der vorliegende Recherchenbericht wurde für alle Patentansprüche erstellt

| Recherchenort | Abschlußdatum der Recherche | Prüfer |
|---|---|---|
| München | 29. Oktober 2010 | Coniglio, Carlo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument

EPO FORM 1503 03.82 (P04C03)

**EP 2 392 812 A1**

**ANHANG ZUM EUROPÄISCHEN RECHERCHENBERICHT
ÜBER DIE EUROPÄISCHE PATENTANMELDUNG NR.**

EP 10 16 4645

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-10-2010

| Im Recherchenbericht angeführtes Patentdokument | | Datum der Veröffentlichung | Mitglied(er) der Patentfamilie | | Datum der Veröffentlichung |
|---|---|---|---|---|---|
| US 4088476 | A | 09-05-1978 | DE | 2649089 A1 | 12-05-1977 |
| | | | DK | 488676 A | 30-04-1977 |
| | | | FR | 2329761 A1 | 27-05-1977 |
| | | | GB | 1558628 A | 09-01-1980 |
| | | | JP | 52053718 A | 30-04-1977 |
| | | | SE | 7612071 A | 30-04-1977 |
| WO 9410354 | A1 | 11-05-1994 | BR | 9204244 A | 03-05-1994 |
| JP 3128162 | A | 31-05-1991 | KEINE | | |
| JP 7018368 | A | 20-01-1995 | JP | 3297150 B2 | 02-07-2002 |
| US 6553957 | B1 | 29-04-2003 | DE | 10083665 T0 | 14-02-2002 |
| | | | WO | 0133065 A1 | 10-05-2001 |
| | | | JP | 3793990 B2 | 05-07-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0525540 A
- EP 0872567 A